# FASCICULE DE BREVET EUROPEEN

(11) **EP 0 526 626 B1**
(45) Date de publication et mention de la délivrance du brevet: **24.05.1995**
(21) Numéro de dépôt: 92907597.6
(22) Date de dépôt: 26.02.1992
(51) Int. Cl.: B01D 5/00, B01D 11/02

(54) **DISPOSITIF ADAPTABLE A UN RECIPIENT, NOTAMMENT POUR REACTIONS CHIMIQUES, REACTEUR COMPORTANT LEDIT DISPOSITIF ET UTILISATION DUDIT REACTEUR**
Vorrichtung aufsetzbar auf einen Behälter, insbesondere für chemische Reaktionen, Reaktor mit einer solchen Vorrichtung und Anwendung dieses Reaktors
DEVICE ADAPTABLE TO A CONTAINER, PARTICULARLY FOR CHEMICAL REACTIONS, REACTOR COMPRISING SAID DEVICE AND USE OF SAID REACTOR

(30) Priorité: 27.02.1991 FR 9102571
(43) Date de publication de la demande: 10.02.1993
(73) Titulaire: SOCIETE PROLABO, 94120 Fontenay-sous-Bois (FR)
(72) Inventeur: DI-MARTINO, Jean-Louis, F-45250 Briare (FR); QUENTIN, Eric, F-45250 Briare (FR)
(74) Mandataire: Ahner, Francis
(86) Numéro de dépôt international: FR9200174
(87) Numéro de publication internationale: WO9215383

(56) Documents cités:
- FR-A- 2 274 330
- FR-A- 2 560 529

## Description

La présente invention concerne un dispositif adaptable à un récipient dans lequel un produit ou un mélange de produits doit subir un traitement générant des vapeurs.

Par "traitement" on entend aussi bien que le produit ou le mélange de produits subit une opération physique, telle que dissolution, cristallisation ... ou subit une réaction chimique.

L'invention concerne également un réacteur comportant un tel dispositif et l'utilisation dudit réacteur.

En laboratoire, par exemple lors de la conduite de réactions chimiques générant des vapeurs, telles que les réactions chimiques par voie humide, on a parfois besoin dans une première phase de condenser les vapeurs émises et de recycler le condensat dans le récipient et dans une deuxième phase d'éliminer au mieux toute trace de liquide dans le produit final.

Pour ce faire dans la première phase on assujettit à l'ouverture du récipient un dispositif de condensation d'un type connu, tel qu'un serpentin ou une colonne de condensation refroidis, puis l'opérateur démonte ce dispositif et assujettit à l'ouverture du récipient un bouchon pourvu d'un évent et comportant un orifice auquel est associé un embout de raccordement à des moyens d'aspiration afin d'éliminer, dans cette deuxième phase, par balayage par un gaz de l'espace interne du récipient, les traces de liquide contenues dans le produit final.

Ce processus donne bien entendu satisfaction mais nécessite l'intervention de l'opérateur entre les deux phases pour démonter le dispositif utilisé dans la phase de condensation puis remonter le dispositif utilisé dans la phase d'élimination du liquide contenu dans le produit final.

De ce fait, il est difficile d'automatiser la conduite d'une réaction chimique comportant ces deux phases.

Le problème est identique lorsque le récipient est destiné à abriter une opération physique générant des vapeurs.

Un but de l'invention est un dispositif adaptable à un récipient, notamment pour réactions chimiques, qui permet d'automatiser ces deux phases opératoires.

Un autre but de l'invention est un dispositif qui ne nécessite pas de démontage ni de remontage entre la phase de condensation des vapeurs et la phase d'élimination des traces de liquide du produit final, c'est-à-dire un dispositif qui permet à la fois ces deux phases opératoires.

Il a maintenant été trouvé, et c'est l'objet de la présente invention, un dispositif adaptable à un récipient, notamment pour réactions chimiques générant des vapeurs, des moyens d'aspiration étant associés audit dispositif, caractérisé en ce qu'il comporte :
- des moyens de condensation des vapeurs, dans une première phase d'utilisation,
- des moyens de passage indépendants des moyens de condensation (3) et qui traversent ces derniers, pour le passage des vapeurs de l'intérieur (11) à l'extérieur du récipient (2) dans une deuxième phase d'utilisation,
- des moyens d'adaptation (5) du dispositif (1) à l'ouverture (6) du récipient (2).

Par "récipient", dans le présent texte, on désigne tout "contenant" habituellement utilisé pour réaliser une réaction chimique ou une opération physique en laboratoire. Ainsi, le dispositif objet de l'invention peut être adapté à l'ouverture d'un tube à essais, d'un ballon, d'un matras ...

Les moyens d'adaptation du dispositif à l'ouverture du récipient sont des moyens habituellement utilisés. Les moyens d'adaptation peuvent être du type bouchon et vissés à l'extrémité du récipient, celui-ci comportant alors une zone filetée. Ils peuvent aussi être de forme conique et s'engager dans l'ouverture également de forme conique du récipient, les surfaces en contact, si le dispositif est en verre, étant rodées pour assurer l'étanchéité.

Les moyens d'aspiration associés au dispositif sont des moyens disponibles habituellement au laboratoire, tels qu'une trompe à vide, un réseau de vide équipant le laboratoire, une pompe à vide ...

Le dispositif, selon l'invention est tel que les moyens de condensation sont constitués par une chambre de condensation reliée par des premiers moyens de passage à l'intérieur du récipient, lesdits premiers moyens de passage permettant d'une part, le passage des vapeurs du récipient vers la chambre de condensation et, d'autre part, le retour du condensat principal dans le récipient.

On appelle "condensat principal" le condensat formé dans la chambre de condensation.

De préférence, la chambre de condensation comporte des deuxièmes moyens de passage assurant d'une part, la liaison des moyens d'aspiration et de l'espace intérieur de la chambre de condensation dans la première phase d'utilisation et, d'autre part, l'entrée d'un gaz de balayage dans le récipient dans la deuxième phase d'utilisation dudit dispositif.

Dans la première phase d'utilisation les deuxièmes moyens de passage assurant la liaison entre les moyens d'aspiration et l'espace intérieur de la chambre de condensation facilitent le passage des vapeurs émises du récipient vers la chambre de condensation.

Avantageusement, afin que dans la première phase d'utilisation du dispositif seule une faible quantité de vapeur puisse s'échapper hors de la chambre de condensation par les deuxièmes moyens de passage, ceux-ci sont d'une section utile (ou section de passage) faible et de préférence la section utile des deuxièmes moyens de passage est inférieure à la section utile des premiers moyens de passage.

La chambre de condensation peut adopter une forme quelconque. De préférence le dispositif, objet de l'invention, est tel que la chambre de condensation est sensiblement cylindrique et est délimitée par une paroi latérale et au moins une paroi supérieure comportant les deuxièmes moyens de passage.

Afin que, dans la première phase d'utilisation du dispositif, les moyens d'aspiration agissent avec plus d'efficacité à travers les deuxièmes moyens de passage pour faciliter le passage des vapeurs du récipient vers la chambre de condensation, avantageusement la paroi latérale de la chambre de condensation s'élève au-dessus de la paroi supérieure pour délimiter une zone d'action des moyens d'aspiration.

Comme il a été dit ci-avant, lors de la première phase d'utilisation un peu de vapeur s'échappe hors de la chambre de condensation par les deuxièmes moyens de passage. Cette vapeur peut alors se condenser sur la surface interne de la zone d'action des moyens d'aspiration ou encore sur les moyens d'aspiration eux-mêmes. Ainsi, afin de récupérer ce condensat, appelé condensat secondaire, de préférence, la surface extérieure de la paroi supérieure de la chambre de condensation est conformée pour constituer une zone de collecte du condensat secondaire et le dispositif comporte des moyens de retour dudit condensat dans la chambre de condensation.

Selon un mode de réalisation du dispositif, selon l'invention, les moyens de retour du condensat secondaire dans la chambre de condensation, sont constitués par les deuxièmes moyens de passage.

Afin de faciliter la condensation des vapeurs dans la chambre de condensation, on peut associer à celle-ci des moyens de refroidissement de sa paroi latérale. Ces moyens de refroidissement peuvent être constitués par une buse soufflant de l'air froid.

Avantageusement, le dispositif, objet de l'invention, peut être tel que la chambre de condensation comporte une double enveloppe délimitant une chambre de circulation d'un fluide de refroidissement.

La chambre de circulation du fluide de refroidissement comporte, bien sûr, une tubulure d'entrée et une tubulure de sortie du fluide de refroidissement, celui-ci est le plus souvent de l'eau.

Le dispositif, selon l'invention peut être tel que les moyens de passage direct des vapeurs de l'intérieur à l'extérieur du récipient, dans la deuxième phase d'utilisation du dispositif, débouchent dans le récipient au voisinage de son ouverture.

De préférence, les moyens de passage direct des vapeurs de l'intérieur à l'extérieur du récipient dans la deuxième phase d'utilisation dudit dispositif sont constitués par un tube dont l'une des extrémités plonge dans le récipient et dont l'autre extrémité est destinée à être reliée aux moyens d'aspiration.

Le tube plonge dans le récipient avantageusement jusqu'au voisinage de la surface du produit final afin que les vapeurs soient entraînées vers l'extérieur du récipient au plus près de leur source pour éviter toute condensation sur la surface interne du récipient.

Le tube constituant les moyens de passage direct des vapeurs de l'intérieur à l'extérieur du récipient traverse de préférence la chambre de condensation, le plus souvent selon son axe.

Afin d'éviter lors de la deuxième phase d'utilisation le refroidissement du tube dans sa partie située dans la chambre de condensation, ce qui risquerait de provoquer la condensation des vapeurs extraites par le gaz de balayage, le tube est entouré, sur au moins une partie de sa longueur située dans la chambre de condensation, d'une chambre annulaire délimitée par une paroi, isolant le tube de la chambre de condensation.

Selon un mode de réalisation du dispositif, objet de l'invention le tube constituant les moyens de passage direct des vapeurs de l'intérieur à l'extérieur du récipient est amovible, traverse la paroi supérieure de la chambre de condensation par un orifice, des moyens de fixation du tube dans l'orifice étant prévus.

Les moyens de fixation du tube dans l'orifice de la paroi supérieure de la chambre de condensation peuvent être constitués par la coopération d'un orifice de forme conique, évasé vers l'extérieur de la chambre de condensation, avec un renflement de forme conique correspondante porté par le tube au voisinage de l'extrémité du tube destinée à être reliée aux moyens d'aspiration. Les surfaces coniques en contact de l'orifice et/ou du renflement peuvent être rôdées si le tube et/ou la chambre de condensation sont en verre.

Un tel mode de réalisation permet d'adapter la longueur du tube pour le passage direct des vapeurs de l'intérieur à l'extérieur du récipient en fonction de la quantité de produit final présente dans le récipient afin que l'extrémité du tube située dans le récipient soit au plus près de la surface du produit final, ce qui améliore le balayage par un gaz de celui-ci pour éliminer les traces de liquide qu'il contient.

Selon un autre mode de réalisation le dispositif, selon l'invention est tel que, entre la chambre de condensation et les moyens d'adaptation du dispositif à l'ouverture du récipient, ledit dispositif comporte un col.

Selon une variante, le col est amovible et comporte des moyens de fixation, d'une part à la chambre de condensation et, d'autre part aux moyens d'adaptation à l'ouverture du récipient.

La présence d'un col entre la chambre de condensation et les moyens d'adaptation du dispositif à l'ouverture du récipient facilite la préhension du dispositif et/ou de l'ensemble constitué par le dispositif et le récipient, en particulier la préhension par la pinced'un robot de manipulation.

Les moyens de fixation d'un col amovible peuvent être constitués par des moyens de vissage ou encore, comme pour le tube, par coopération de deux surfaces coniques.

Les moyens d'aspiration peuvent être associés au dispositif par un conduit terminant les moyens d'aspiration, emmanché à force à l'extrémité du tube de passage direct dans la deuxième phase d'utilisation du dispositif.

Pour un dispositif qui comporte des deuxièmes moyens de passage assurant la liaison des moyens d'aspiration et de la chambre de condensation, dans la première phase d'utilisation on adaptera une partie terminale en forme d'entonnoir renversé au conduit terminant les moyens d'aspiration.

Avantageusement, le dispositif comporte des moyens pour l'associer aux moyens d'aspiration. Ces moyens permettent, dans la première phase d'utilisation de faire agir les moyens d'aspiration dans la zone d'action prévue à cet effet au-dessus de la paroi supérieure de la chambre de condensation et dans la deuxième phase d'utilisation de relier directement le tube de passage direct des vapeurs du récipient, hors du récipient vers le moyen d'aspiration.

De préférence, les moyens pour associer le dispositif aux moyens d'aspiration sont tels qu'un simple déplacement par translation, selon l'axe du dispositif, permet d'associer le dispositif aux moyens d'aspiration pour les deux phases d'utilisation dudit dispositif.

Ainsi, les moyens pour associer le dispositif aux moyens d'aspiration peuvent être constitués par un embout adaptable au conduit terminant les moyens d'aspiration. Cet embout, comporte un passage traversant pourvu à l'une de ses extrémités de moyens de raccordement aux moyens d'aspiration, ce passage débouchant à son autre extrémité dans une zone évasée, l'embout étant de dimensions telles qu'au voisinage de la zone évasée il puisse pénétrer, avec jeu, dans la zone d'action des moyens d'aspiration et que l'ouverture du passage traversant dans la zone évasée s'adapte étroitement à l'extrémité du tube de passage direct des vapeurs, dans la deuxième phase d'utilisation du dispositif.

L'ouverture du passage traversant, peut aussi, selon un autre mode de réalisation s'adapter étroitement à l'extrémité d'un adaptateur placé sur la surface extérieure de la paroi supérieure de la chambre de condensation.

Selon une variante, afin de pouvoir introduire dans le récipient un produit, tel qu'un réactif liquide, pendant l'utilisation du dispositif selon l'invention l'embout comporte un conduit de passage direct de l'extérieur de l'embout vers la zone d'action des moyens d'aspiration. Le produit introduit par le conduit de passage, entre dans la chambre de condensation par les deuxièmes moyens de passage prévus dans la paroi supérieure de celle-ci, puis s'écoule dans le récipient, par les premiers moyens de passage.

Toutes les parties du dispositif selon l'invention, susceptibles d'être en contact avec les produits traités et/ou avec les vapeurs générées par le traitement, sont avantageusement réalisées en matériau résistant bien à la corrosion, les produits traités, notamment ceux utilisés pour les réactions chimiques par voie humide étant particulièrement agressifs et la température atteinte dans les récipients élevée. Comme matériau, le verre et le polytétrafluoroéthylène conviennent généralement bien.

Un récipient associé à un dispositif tel que décrit ci-avant peuvent constituer un réacteur pour réaction chimique, le mélange réactionnel étant contenu dans le récipient. Un tel réacteur permet, dans une première phase d'utilisation, de condenser les vapeurs émises et de recycler le condensat dans le mélange réactionnel et, dans une deuxième phase, d'éliminer la plus grande partie du liquide contenu dans le produit final de la réaction. Un tel réacteur peut être chauffé par des moyens habituels, tels que par exemple un bain chauffant. Cependant un tel réacteur est plus particulièrement destiné à être soumis à un chauffage par micro-ondes, le récipient étant placé dans une cavité d'application des micro-ondes en liaison avec un guide d'ondes dans lequel émet un générateur.

L'invention sera mieux comprise par la description des figures ci-jointes, qui représentent, à titre d'exemple, schématiquement, sans échelle déterminée, divers modes de réalisation du dispositif et du réacteur, objets de la présente invention.

La figure 1 est une vue en coupe, par un plan vertical de symétrie, d'un dispositif et d'un embout selon un mode de réalisation, positionnés pour la première phase d'utilisation.

La figure 2 est une vue en coupe, par un plan vertical de symétrie, du dispositif et de l'embout selon la figure 1, positionnés pour la deuxième phase d'utilisation.

La figure 3 est une vue en coupe, par un plan vertical de symétrie, d'un réacteur formé par un dispositif selon un autre mode de réalisation associé à un récipient et à un embout selon la figure 1, positionnés pour la première phase d'utilisation.

La figure 4 est une vue en coupe, par un plan vertical de symétrie, du réacteur selon la figure 3, pendant la deuxième phase d'utilisation.

La figure 5 est une vue en coupe, par un plan vertical de symétrie, d'un dispositif selon encore un autre mode de réalisation.

La figure 6 est une vue partielle, en coupe par un plan vertical de symétrie, d'un dispositif et d'un embout selon un autre mode de réalisation.

La figure 7 est une vue partielle, en coupe par un plan vertical de symétrie, d'un autre mode de réalisation du dispositif.

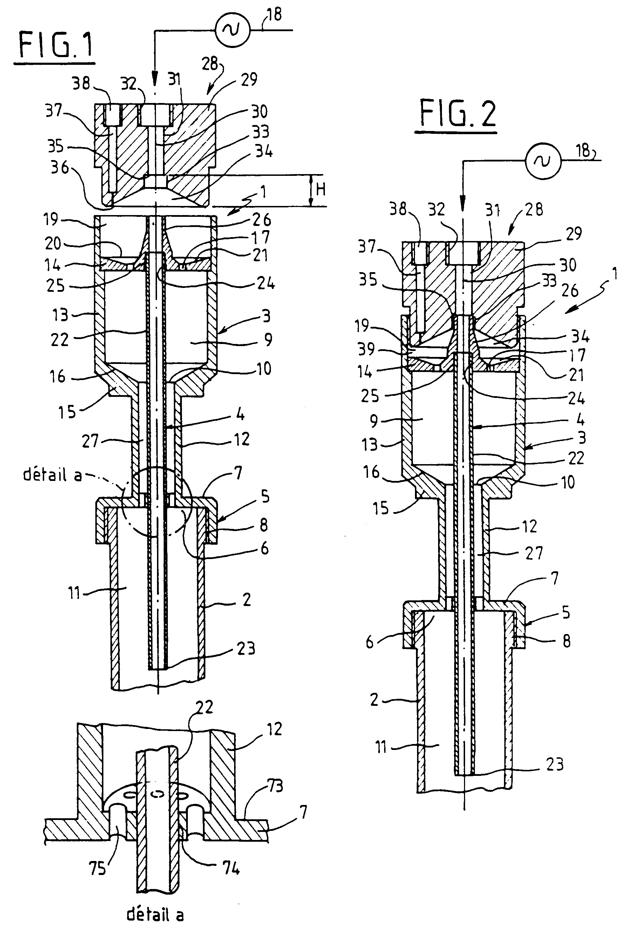

Le dispositif (1) objet de l'invention, adaptable à un récipient (2), représenté en coupe par un plan vertical de symétrie figures 1 et 2, dans ses deux phases d'utilisation, comporte :
- des moyens de condensation (3) des vapeurs utilisés dans la première phase,
- des moyens de passage direct (4) des vapeurs de l'intérieur (11) à l'extérieur du récipient (2) utilisés dans la deuxième phase,
- des moyens d'adaptation (5) à l'ouverture (6) du récipient (2).

Selon le mode de réalisation représenté, les moyens d'adaptation (5) sont du type bouchon (7) et fixés par vissage à l'extrémité du récipient (2) pourvue sur sa surface extérieure d'une zone filetée (8).

Les moyens de condensation (3) des vapeurs sont constitués par une chambre de condensation (9) reliée par des premiers moyens de passage (10) à l'intérieur (11) du récipient (2). Les premiers moyens de passage (10) permettent d'une part, le passage des vapeurs du récipient (2) vers la chambre de condensation (9) et, d'autre part, le retour du condensat principal, de la chambre de condensation (9) vers le récipient (2).

La chambre de condensation (9) est sensiblement cylindrique et limitée par une paroi latérale (13), une paroi supérieure (14) et une paroi inférieure (15) qui porte les premiers moyens de passage (10).

Avantageusement la surface intérieure (16) de la paroi inférieure (15) est de forme tronconique, le sommet virtuel du cône étant situé vers le bas, de façon à faciliter la collecte et l'écoulement du condensat principal vers les premiers moyens de passage (10).

La paroi supérieure (14) de la chambre de condensation (9), selon ce mode de réalisation, comporte des deuxièmes moyens de passage (17) constitués par des trous. Ces deuxièmes moyens de passage (17) assurent, comme il sera décrit ci-après, d'une part la liaison entre les moyens d'aspiration (18) et l'espace intérieur de la chambre de condensation (9) dans la première phase d'utilisation du dispositif (1) et, d'autre part, l'entrée d'un gaz de balayage dans le récipient (2) dans la deuxième phase d'utilisation du dispositif (1).

Ces deuxièmes moyens de passage (17) peuvent aussi servir au retour d'un condensat secondaire dans la chambre de condensation (9).

De préférence la section utile, c'est-à-dire la section de passage des deuxièmes moyens de passage (17) est inférieure à la section utile des premiers moyens de passage (10).

Afin de faciliter la récupération du condensat secondaire et de le diriger vers les deuxièmes moyens de passage (17), la surface extérieure (20) de la paroi supérieure (14) de la chambre de condensation (9) est conformée pour constituer une zone de collecte du condensat secondaire. La surface extérieure (20) est constituée de deux surfaces inclinées, délimitant une rigole annulaire (21), les deuxièmes moyens de passages (17) étant situés à la partie basse de celle-ci et constituant les moyens de retour du condensat secondaire dans la chambre de condensation (9).

Selon le présent mode de réalisation du dispositif (1) la paroi latérale (13) de la chambre de condensation (9) s'élève au-dessus de la paroi supérieure (14) de celle-ci pour délimiter une zone d'action (19) des moyens d'aspiration (18). Cette zone d'action (19) permet aux moyens d'aspiration (18) d'agir avec plus d'efficacité à travers les deuxièmes moyens de passage (17) pour faciliter le passage des vapeurs du récipient (2) vers la chambre de condensation (9).

Le dispositif (1) selon le mode de réalisation représenté comporte entre la chambre de condensation (9) et les moyens d'adaptation (5), un col (12) tubulaire adapté à la partie inférieure de la chambre de condensation (9), les premiers moyens de passage (10) débouchant dans la partie creuse du col (12).

Le dispositif (1), objet de l'invention, comporte des moyens de passage direct (4) de l'intérieur (11) à l'extérieur du récipient (2), dans la deuxième phase d'utilisation du dispositif (1), constitués par un tube (22) dont l'extrémité (23) plonge dans le récipient (2) et dont l'autre extrémité (24) est destinée à être reliée aux moyens d'aspiration (18).

Selon le mode de réalisation représenté l'extrémité (24) du tube (22) est engagée dans un orifice (25) de la paroi supérieure (14) de la chambre de condensation (9), cet orifice (25) étant pourvu sur la surface extérieure (20) de la paroi supérieure (14) d'un adaptateur (26) pour faciliter la liaison du tube (22) aux moyens d'aspiration (18).

Le tube (22) de passage direct des vapeurs plonge dans le récipient (2) jusqu'au voisinage de la surface du produit final contenu dans le récipient (2) afin que les vapeurs du liquide présent dans le produit final soient entraînées au plus près de leur source pour éviter tout risque de condensation sur les parois du récipient (2).

Le tube (22) de passage direct des vapeurs, traverse la chambre de condensation (9), puis passe à l'intérieur du col (12) tubulaire. Les dimensions extérieures du tube (22) et les dimensions intérieures du col (12) sont choisies de façon telle qu'un passage annulaire (27) soit ménagé entre les deux et que la section utile de ce passage annulaire (27) soit au moins égale à la section utile des premiers moyens de passage (10).

Le tube (22) traverse la paroi supérieure (73) des moyens d'adaptation (5) du type bouchon (7) par un orifice (74) dont la dimension est telle que le tube (22) entre en force dans l'orifice (74), ce qui assure le maintien en position du tube (22) (cf. détail a). Bien sûr la zone de paroi supérieure (73) du bouchon (7) est pourvue d'une pluralité de trous (75) assurant le passage des vapeurs du récipient (2) vers la chambre de condensation (9) et le passage du condensat principal de la chambre de condensation (9) vers le récipient (2) dans la première phase d'utilisation, et le passage du gaz de balayage de l'extérieur du dispositif (1) vers le récipient (2) dans la deuxième phase d'utilisation. Avantageusement, la section utile des trous (75) est supérieure à la section utile des premiers moyens de passage (10).

Le dispositif (1) représenté figures 1 et 2 comporte des moyens (28) pour associer le dispositif (1) aux moyens d'aspiration (18) représentés schématiquement.

Selon le présent mode de réalisation les moyens (28) sont constitués par un embout (29) adaptable au conduit terminant les moyens d'aspiration (18).

L'embout (29) est sensiblement de forme cylindrique, il comporte un passage traversant (30) pourvu à une extrémité (31) de moyens de raccordement (32) aux moyens d'aspiration (18). Les moyens de raccordement (32) peuvent être constitués par une zone filetée permettant la fixation d'un raccord.

A son autre extrémité (33), qui est l'extrémité située la plus près de la zone d'action (19) des moyens d'aspiration (18), le passage traversant (30) débouche dans une zone évasée (34). La zone évasée (34) est de forme tronconique et le passage traversant (30) débouche au sommet de la zone évasée (34). L'ouverture du passage traversant (30) au sommet de la zone évasée (34) est de dimensions telles que le tube (22) de passage direct des vapeurs puisse d'adapter étroitement au passage traversant (30), par exemple en pénétrant dans celui-ci, ou, comme représenté figure 2, c'est l'adaptateur (26) qui pénètre dans le passage traversant (30), celui-ci présentant au voisinage de son extrémité (33) un plus grand diamètre délimitant une butée (35) pour l'adaptateur (26).

L'embout (29) de forme cylindrique est, au moins au voisinage de la zone évasée (34) de dimensions telles qu'il puisse pénétrer avec jeu (39) dans la zone d'action (19) des moyens d'aspiration (18), comme représenté figure 2. Ainsi, le diamètre de l'embout (29) au voisinage de la zone évasée (34) est inférieur au diamètre intérieur de la zone d'action (19) des moyens d'aspiration (18) et la distance H entre la butée (35) et la face (36) de l'embout (29) est telle que la face (36) de l'embout (29) ne soit pas en contact avec la surface extérieure (20) de la paroi supérieure (14) de la chambre de condensation (9) lorsque l'embout (29) est engagé sur l'adaptateur (26).

Le jeu (39) maintenu entre l'embout (29) et les parois de la zone d'action (19) des moyens d'aspiration (18) permet dans la deuxième phase d'utilisation, l'entrée de gaz de balayage par les deuxièmes moyens de passage (17) dans le récipient (2), le gaz de balayage traversant la chambre de condensation (9), les premiers moyens de passage (10) puis le passage annulaire (27) ménagé entre le tube (22) et le col (12).

Selon le mode de réalisation représenté l'embout (29) présente un conduit (37) de passage direct de l'extérieur de l'embout (29) vers la zone d'action (19) des moyens d'aspiration (18). Le conduit (37) est de préférence muni d'une zone filetée (38) permettant l'adaptation d'un raccord.

Ce conduit (37) est destiné à introduire un produit, tel qu'un fluide, dans le récipient (2) pendant qu'une opération se déroule dans celui-ci. En effet, le produit introduit par le conduit (37) entre dans la chambre de condensation (9) par les deuxièmes moyens de passage (17) puis s'écoule vers le récipient (2) par les premiers moyens de passage (10) et le passage annulaire (27).

On va maintenant décrire, en se référant aux figures 1 et 2 le fonctionnement du dispositif objet de l'invention dans ses deux phases d'utilisation. Au préalable, les moyens d'aspiration (18) sont reliés par un tuyau muni d'un raccord vissé dans la zone filetée des moyens de raccordements (32).

Dans la première phase d'utilisation, tel que représenté figure 1, l'embout (19) destiné à associer le dispositif (1) aux moyens d'aspiration (18) n'est pas engagé dans la zone d'action (19) des moyens d'aspiration (18).

Les moyens d'aspiration (18), agissent par l'intermédiaire de la zone évasée (34) sur toute la surface de la zone d'action (19) et le faible effet d'aspiration transmis par les deuxièmes moyens de passage (17) dans la chambre de condensation (9) facilite l'ascension dans celle-ci des vapeurs émises dans le récipient (2) et qui montent vers la chambre de condensation (9) par le passage annulaire (27) et les premiers moyens de passage (10).

Dans la chambre de condensation (9) les vapeurs se condensent et leur condensat, appelé condensat principal, est recyclé dans le récipient (2) par les premiers moyens de passage (10) et le passage annulaire (27).

Bien sûr une petite quantité de la vapeur émise dans le récipient (2) d'une part, monte par le tube (22) de passage direct et, d'autre part, sort de la chambre de condensation (9) par les deuxièmes moyens de passage (17). Le plus souvent cette petite quantité de vapeur se condense sur les parois de la zone d'action (19) des moyens d'aspiration (18) ou sur la surface de la zone évasée (34). Ce condensat secondaire est récupéré dans la rigole annulaire (21) puis s'écoule dans la chambre de condensation (9) par les deuxièmes moyens de passage (17) et est recyclé dans le récipient (2) avec le condensat principal.

On peut bien entendu, si nécessaire introduire pendant la première phase d'utilisation, un produit dans le récipient (2) par le conduit (37).

Dans la deuxième phase d'utilisation, tel que représenté figure 2, l'embout (19) destiné à associer le dispositif (1) aux moyens d'aspiration (18) est déplacé en translation, selon l'axe du dispositif (1), par exemple automatiquement par la pince d'un robot.

L'embout (29) est engagé dans la zone d'action (19) des moyens d'aspiration (18) jusqu'à ce que l'adaptateur (26) vienne au contact de la butée (35) du passage traversant (30). Ainsi, les moyens de passage direct (4) des vapeurs du récipient (2) vers les moyens d'aspiration (18) sont reliés à ceux-ci par le passage traversant (30).

Les moyens d'aspiration (18) aspirent donc les vapeurs émises dans le récipient (2). L'entrée de gaz de balayage dans le récipient (2), par le jeu (39) entre l'embout (28) et la zone d'action (19) des moyens de balayage (18), les deuxièmes moyens de passage (17), la chambre de condensation (9), les premiers moyens de passage (10) et le passage annulaire (27), permet l'entraînement des traces de liquide présentes dans le produit final contenu dans le récipient (2) et permet de recueillir un produit final pratiquement sec.

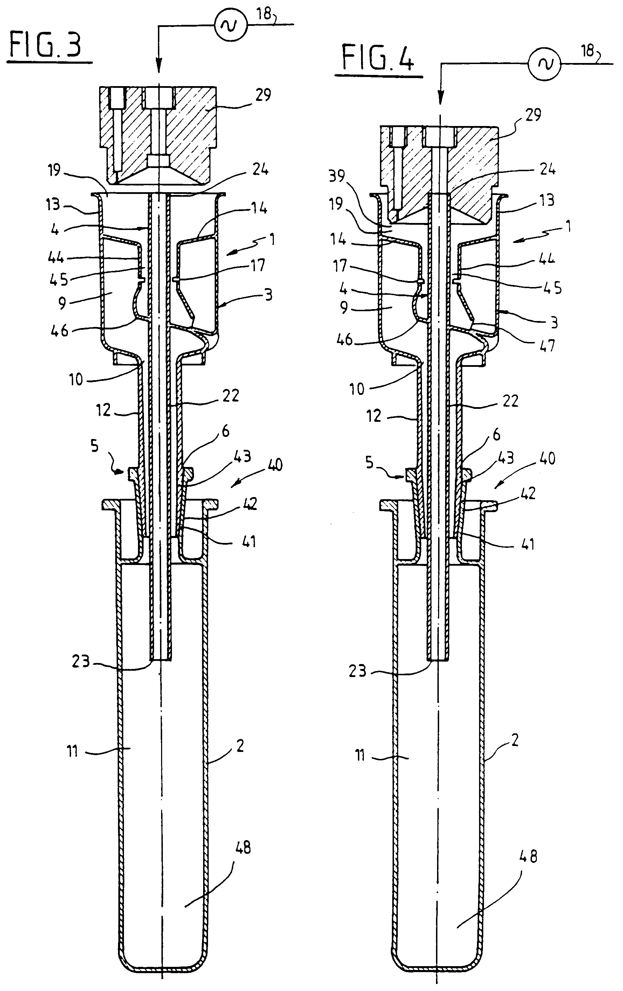

Les figures 3 et 4 représentent un réacteur (40), également objet de l'invention, formé par un dispositif (1) selon un autre mode de réalisation, associé à un récipient (2).

Le réacteur (40) comporte essentiellement :
- un récipient (2), sensiblement tubulaire, pourvu d'une ouverture (6) en forme de col (41), dont la face interne (42) est conique et de surface rodée,
- un dispositif (1) qui est constitué par :
   . des moyens de condensation (3) des vapeurs utilisés dans la première phase, formés par une chambre de condensation (9),
   . des moyens de passage direct (4) des vapeurs de l'intérieur (11) à l'extérieur du récipient (2) constitués par un tube (22), utilisés dans la deuxième phase,
   . des moyens d'adaptation (5) à l'ouverture (6) du récipient (2),
- des moyens (28) pour associer le dispositif (1) aux moyens d'aspiration (18), représentés schématiquement, constitués par un embout (29).

L'embout (29) est analogue à celui représenté figures 1 et 2 et ne sera pas décrit spécifiquement.

Selon le mode de réalisation représenté, les moyens d'adaptation (5) du dispositif (1) à l'ouverture (6) en forme de col (41) sont formés par une zone conique (43), de surface rodée, s'adaptant à la face interne (42) du col (41) du récipient (2). La zone conique (43) est située à l'extrémité opposée à la chambre de condensation (9) du col (12) du dispositif (1).

La chambre de condensation (9), comme la chambre de condensation (9) du dispositif (1) représenté figures 1 et 2, est reliée par des premiers moyens de passage (10) à l'intérieur (11) du récipient (2).

La paroi supérieure (14) de la chambre de condensation (9) selon ce mode de réalisation est inclinée de la paroi latérale (13) de la zone d'action (19) des moyens d'aspiration (18) vers l'axe vertical du dispositif (1) sans cependant atteindre la paroi du tube (22) de passage direct des vapeurs du récipient (2) vers les moyens d'aspiration (18). La paroi supérieure (14) se prolonge, au voisinage du tube (22) par une paroi (44) sensiblement cylindrique délimitant un espace annulaire (45) autour du tube (22), l'espace annulaire (45) est fermé à sa partie basse par une paroi inclinée (46), permettant l'écoulement du condensat secondaire par un trou (47) ménagé entre la paroi (44) et la zone située à l'altitude la moins élevée de la paroi inclinée (46).

La paroi (44) sensiblement cyclindrique délimitant l'espace annulaire (45) comporte des trous formant les deuxièmes moyens de passage (17).

Un dispositif (1), objet de l'invention, selon le mode de réalisation représenté figures 3 et 4, est monobloc, il peut être réalisé en verre.

Les deux phases d'utilisation du dispositif (1) décrit ci-avant sont analogues à celles décrites pour le mode de réalisation représenté figures 1 et 2.

On va cependant décrire le déroulement d'une réaction chimique, par exemple une minéralisation, dans un réacteur (40) également, objet de l'invention, constitué par un dispositif (1) associé à un récipient (2).

On place dans le récipient (2) le produit et l'acide permettant l'attaque chimique du produit. Le dispositif (1) est assujettit à l'ouverture (6) du récipient (2) en engageant la zone conique (43) du dispositif (1) dans la zone conique (42) du col (41) du récipient (2). L'embout (29) est associé au dispositif (1) tel que représenté figure 3.

Le récipient (2) est chauffé, dans sa partie basse (48) contenant le mélange réactionnel par des moyens de chauffage appropriés. De préférence la partie basse (48) du récipient (2) est placée dans une cavité d'application des micro-ondes en liaison avec un guide d'ondes, telle que décrite dans le brevet français n° 84/03496.

Pendant cette phase de chauffage, les vapeurs d'acide formées s'élèvent et viennent dans la chambre de condensation (9) où elles se condensent, le condensat principal et éventuellement le condensat secondaire sont recyclés dans le récipient (2) en s'écoulant par les premiers moyens de passage (10), pour participer de nouveau à la réaction chimique.

Quand la réaction chimique est terminée, l'embout (29) est introduit dans la zone d'action (19) des moyens d'aspiration (18) jusqu'à ce que le tube (22) soit engagé dans l'embout (29) comme représenté figure 3.

Le récipient (2) contenant le produit final étant toujours chauffé, sous l'action des moyens d'aspiration (18), de l'air de balayage pénètre par le jeu (39) entre l'embout (29) et les parois (13) et (14) de la chambre de condensation (9), pénètre dans celle-ci par les deuxièmes moyens de passage (17), descend dans le récipient (2) et remonte par le tube (22) vers les moyens d'aspiration (18) en entraînant les vapeurs du liquide contenu dans le produit final. On peut ainsi éliminer partiellement ou même totalement les acides encore présents dans le produit final.

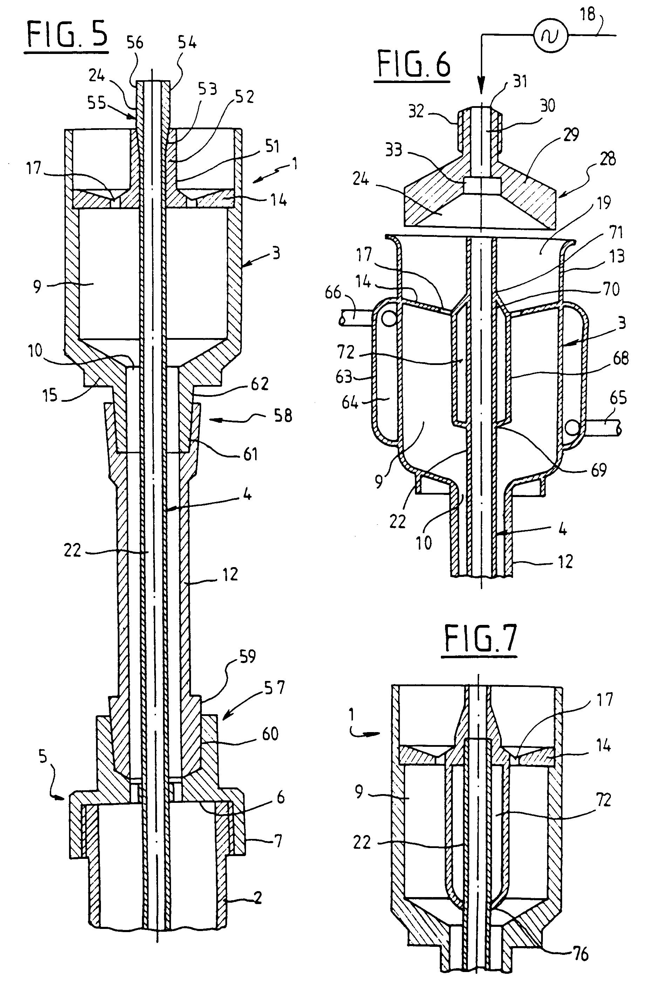

Le dispositif (1), objet de l'invention, selon le mode de réalisation représenté en coupe par un plan vertical de symétrie figure 5, comporte :
- des moyens de condensation (3) des vapeurs, constitués par une chambre de condensation (9) analogue à celle du dispositif représenté figure 1,
- des moyens de passage direct (4) des vapeurs de l'intérieur (11) à l'extérieur du récipient (2) constitués par un tube (22),
- des moyens d'adaptation (5) à l'ouverture (6) du récipient (2),
- un col (12) entre la chambre de condensation (9) et les moyens d'adaptation (5).

Selon le présent mode de réalisation, le tube (22) constituant les moyens de passage direct (4) des vapeurs de l'intérieur (11) à l'extérieur du récipient (2) est amovible. Le tube (22) traverse la paroi supérieure (14) de la chambre de condensation (9) par un orifice (51) bordé sur la face extérieure de la paroi supérieure (14) par une collerette (52) tubulaire dont la surface intérieure (53) est de forme conique, au moins au voisinage de l'extrémité de la collerette (52) la plus éloignée de la paroi supérieure (14). La surface intérieure (53) présente de préférence un aspect rodé.

Le tube (22) présente au voisinage de son extrémité (24) située hors du récipient (2) un renflement (54) de forme conique, correspondant à la surface intérieure (53) conique de la collerette (52). Le renflement (54) de forme conique, a de préférence une surface d'aspect rodé.

Les moyens de fixation (55) du tube (22) dans l'orifice (51) de la paroi supérieure (14) de la chambre de condensation (9) sont ainsi constitués par la coopération de la surface intérieure (53) conique de l'orifice (51) et de la surface extérieure conique du renflement (54).

Le tube (22) présente avantageusement au dessus du renflement (54) de forme conique une zone de surface extérieure cylindrique (56) pour relier le tube (22) aux moyens d'aspiration (18).

Selon le présent mode de réalisation, le col (12) entre la chambre de condensation (9) et les moyens d'adaptation (5) est également amovible.

Le col (12) comporte des moyens de fixation (57, 58) respectivement au bouchon (7) d'adaptation du dispositif (1) au récipient (2) et à la chambre de condensation (9).

Les moyens de fixation (57) sont constitués par une zone conique mâle (59) portée par le col (22) s'adaptant à une zone conique femelle (60) portée par le bouchon (7).

Les moyens de fixation (58), sont de façon analogue, constitués par une zone conique femelle (61) portée par le tube (22) s'adaptant à une zone conique mâle (62) portée par la paroi inférieure (15) de la chambre de condensation (9).

Afin d'assurer l'étanchéité et une bonne fixation du bouchon (7), du col (12) et de la chambre de condensation (9) les uns par rapport aux autres, les zones coniques (59, 60, 61, 62) présentent des surfaces d'aspect rodé.

Les zone coniques (59, 60, 61, 62) des moyens de fixation (57, 58) peuvent bien sûr être remplacées par des zones filetées, le bouchon (7), le col (12) et la chambre de condensation (9) seront alors assemblés par vissage.

Selon le présent mode de réalisation, le tube (22) pouvant être de longueur importante, le bouchon (7) présente avantageusement un support (67) tel que celui représenté détail a) figure 1.

Un dispositif (1) dont le tube (22) et/ou le col (12) sont amovibles permet d'adapter la longueur du tube (22) à la quantité de produit final présent dans le récipient (2) afin que le tube (22) débouche au plus près de la surface du produit final. De plus, le choix de la longueur du col (12) permet de faciliter la manipulation du dispositif par un robot.

Le dispositif (1) selon l'invention dont une vue partielle en coupe par un plan vertical de symétrie est représentée figure 6, a une chambre de condensation (9) qui comporte aussi des premiers passages (10) et des deuxièmes passages (17). Cependant, la chambre de condensation (9), selon le présent mode de réalisation, comporte une double enveloppe (63) délimitant une chambre de circulation (64) pour un fluide de refroidissement. La chambre de circulation (64) comporte une tubulure d'entrée (65) et une tubulure de sortie (66) pour le fluide de refroidissement. L'eau est souvent utilisée comme fluide de refroidissement.

La circulation de fluide dans la chambre de circulation (64) favorise la condensation des vapeurs dans la chambre de condensation (9).

Comme pour la chambre de condensation (9) du dispositif (1) représenté figure 3, la paroi supérieure (14) est inclinée de la paroi latérale (13) de la zone d'action (19) des moyens d'aspiration (18) vers l'axe vertical du dispositif (1) sans atteindre la paroi du tube (22). La paroi supérieure (14) se prolonge vers le bas par une paroi (68) sensiblement cylindrique qui s'incurve jusqu'à entrer en contact en (69) avec le tube (22) ; elle se prolonge vers le haut par une paroi (70) inclinée qui vient en contact en (71) avec le tube (22). Les parois (68) et (70) délimitent autour du tube (22) une chambre annulaire (72).

Cette chambre annulaire (72) isole le tube (22) du courant d'air provoqué, dans la deuxième phase d'utilisation du dispositif (1) par l'entrée de l'air par les deuxièmes passages (17) dans la chambre de condensation (9).

Si le dispositif (1) n'est pas monobloc, les ouvertures en (71) et (69) de la chambre annulaire (72) sont de dimensions telles que le tube (22) entre en force, ce qui assure le maintien en position du tube (22).

Le dispositif (1) comporte des moyens (28) pour associer le dispositif aux moyens d'aspiration (18) représentés schématiquement, ces moyens (28) sont constitués par un embout (29).

L'embout (29) comporte un passage traversant (30) pourvu à une extrémité (31) d'une surface extérieure (32) filetée permettant la fixation d'un raccord. A son autre extrémité (33) le passage traversant (30) débouche dans une zone évasée (34) tronconique.

Le passage traversant (30) présente au voisinage de la zone évasée (34) un plus grand diamètre destiné à créer une butée (35) pour le tube (21) de passage direct des vapeurs de l'intérieur (11) à l'extérieur du récipient (2).

L'embout (29) a, ainsi, sensiblement une forme d'entonnoir, il est de dimensions telles que dans la deuxième phase d'utilisation du dispositif (1) selon l'invention, il puisse s'engager dans la zone d'action (19) des moyens d'aspiration (18) et que l'extrémité (24) du tube (22) vienne au contact de la butée (35).

Le dispositif (1) selon le mode de réalisation représenté partiellement, en coupe par un plan vertical de symétrie figure 7, comporte une chambre annulaire (72) dont la paroi (68) est solidaire de la paroi supérieure (14) de la chambre de condensation (9).

La chambre annulaire (72) possède à sa partie basse un trou (76) destiné au passage du tube (22). Les dimensions du trou (76) sont telles que le tube (22) entre en force, ce qui contribue au maintien en position du tube (22).

La chambre annulaire (72) est sensiblement cylindrique et entoure le tube (22) sur pratiquement toute sa longueur située dans la chambre de condensation (9) pour isoler le tube (22) du courant d'air provoqué dans la deuxième phase d'utilisation du dispositif (1) par l'entrée de l'air de balayage par les deuxièmes passages (17) dans la chambre de condensation (9). Cette isolation du tube (22) dans pratiquement toute la traversée de la chambre de condensation (9) empêche la condensation de liquide sur la face intérieure du tube (22) dans la deuxième phase d'utilisation.

Bien entendu l'invention n'est nullement limitée aux divers modes de réalisation décrits spécifiquement dans le présent exposé et l'on peut adopter des variantes ou perfectionnements portant sur les divers moyens mis en oeuvre sans pour autant sortir du cadre de l'invention.

Sans sortir du cadre de l'invention on peut aussi combiner entres elles deux ou plusieurs modes de réalisation ou variantes décrits ci-avant à titre d'exemples et qui ne sont nullement limitatifs.

Le dispositif adaptable à un récipient, notamment pour réaction chimique générant des vapeurs, présente des avantages. D'une part, il permet la condensation des vapeurs et le recyclage du condensat dans le récipient pendant le déroulement de la réaction, ce qui évite l'emploi d'une grande quantité de réactif. D'autre part, il permet de pratiquement éliminer du produit final contenu dans le récipient toute trace de liquide.

Le dispositif, objet de l'invention, auquel est adapté un récipient peut être destiné à la réalisation d'opérations physiques telles que dissolution, fusion, cristallisation d'un produit ou d'un mélange de produits.

Le réacteur également objet de l'invention, constitué d'un dispositif auquel est adapté un récipient peut aussi être destiné à la réalisation de réactions chimiques, notamment par voie humide, sur un produit ou un mélange de produits. Le réacteur ainsi constitué, par association du dispositif et du récipient, est particulièrement destiné à la conduite de réactions telles que le traitement acide ou alcalin par voie humide d'échantillons à des fins de dissolution, d'hydrolyse ou de minéralisation.

## Revendications

1. Dispositif (1) adaptable à un récipient (2), notamment pour réactions chimiques générant des vapeurs, des moyens d'aspiration (18) étant associés audit dispositif (1), caractérisé en ce qu'il comporte :
- des moyens de condensation (3) des vapeurs, dans une première phase d'utilisation,
- des moyens de passage indépendants des moyens de condensation (3) et qui traversent ces derniers, pour le passage des vapeurs de l'intérieur (11) à l'extérieur du récipient (2) dans une deuxième phase d'utilisation,
- des moyens d'adaptation (5) du dispositif (1) à l'ouverture (6) du récipient (2).

2. Dispositif selon la revendication 1 caractérisé en ce que les moyens de condensation (3) sont constitués par une chambre de condensation (9) reliée par des premiers moyens de passage (10) à l'intérieur (11) du récipient (2), lesdits premiers moyens de passage (10) permettant d'une part, le passage des vapeurs du récipient (2) vers la chambre de condensation (9) et, d'autre part, le retour du condensat principal dans le récipient (2).

3. Dispositif selon l'une quelconque des revendications 1 ou 2 caractérisé en ce que la chambre de condensation (9) comporte des deuxièmes moyens de passage (17) assurant d'une part, la liaison des moyens d'aspiration (18) et de l'espace intérieur de la chambre de condensation (9) dans la première phase d'utilisation et, d'autre part, l'entrée d'un gaz de balayage dans le récipient (2) dans la deuxième phase d'utilisation dudit dispositif (1).

4. Dispositif selon la revendication 3 caractérisé en ce que la section utile des deuxièmes moyens de passage (17) est inférieure à la section utile des premiers moyens de passage (10).

5. Dispositif selon l'une quelconque des revendications 2 à 4 caractérisé en ce que la chambre de condensation (9) est sensiblement cylindrique, délimitée par une paroi latérale (13) et au moins une paroi supérieure (14) comportant les deuxièmes moyens de passage (17).

6. Dispositif selon l'une quelconque des revendications 2 à 5 caractérisé en ce que la paroi latérale (13) s'élève au-dessus de la paroi supérieure (14) pour délimiter une zone d'action (19) des moyens d'aspiration (18).

7. Dispositif selon l'une quelconque des revendications 5 ou 6 caractérisé en ce que la surface extérieure (20) de la paroi supérieure (14) de la chambre de condensation (9) est conformée pour constituer une zone de collecte d'un condensat secondaire et que le dispositif (1) comporte des moyens de retour dudit condensat dans la chambre de condensation (9).

8. Dispositif selon l'une quelconque des revendications 2 à 7 caractérisé en ce que la chambre de condensation (9) comporte une double enveloppe (63) délimitant une chambre de circulation (64) d'un fluide de refroidissement.

9. Dispositif selon l'une quelconque des revendications 1 à 8 caractérisé en ce que les moyens de passage direct (4) des vapeurs de l'intérieur (11) à l'extérieur du récipient (2) dans la deuxième phase d'utilisation dudit dispositif (1) sont constitués par un tube (22) dont l'une (23) des extrémités (23, 24) plonge dans le récipient (2) et dont l'autre extrémité (24) est destinée à être reliée aux moyens d'aspiration (18).

10. Dispositif selon l'une quelconque des revendications 2 à 9 caractérisé en ce que le tube (22) constituant les moyens de passage direct (4) des vapeurs de l'intérieur (11) à l'extérieur du récipient (2) traverse la chambre de condensation (9).

11. Dispositif selon la revendication 10 caractérisé en ce que le tube (22) est entouré, sur au moins une partie de sa longueur située dans la chambre de condensation (9), d'une chambre annulaire (72) délimitée par une paroi (68), isolant le tube (22) de la chambre de condensation (9).

12. Dispositif selon l'une quelconque des revendications 10 ou 11, caractérisé en ce que le tube (22) est amovible, traverse la paroi supérieure (14) de la chambre de condensation (9) par un orifice (51), des moyens de fixation (55) du tube (22) dans l'orifice (51) étant prévus.

13. Dispositif selon l'une quelconque des revendications 2 à 12 caractérisé en ce que entre la chambre de condensation (9) et les moyens d'adaptation (5) du dispositif (1) à l'ouverture (6) du récipient (2), ledit dispositif (1) comporte un col (12).

14. Dispositif selon la revendication 13 caractérisé en ce que le col (12) est amovible et comporte des moyens de fixation (58, 57) d'une part à la chambre de condensation (9) et d'autre part aux moyens d'adaptation (5) à l'ouverture (6) du récipient (2).

15. Dispositif selon l'une quelconque des revendications 2 à 14 caractérisé en ce qu'il comporte en outre des moyens (28) pour associer le dispositif (1) aux moyens d'aspiration (18).

16. Dispositif selon la revendication 15 caractérisé en ce que les moyens (28) pour associer le dispositif (1) aux moyens d'aspiration (18) sont constitués par un embout (29), comportant un passage traversant (30) pourvu à l'une de ses extrémités (31) de moyens de raccordement (32) aux moyens d'aspiration (18) ledit passage traversant (30) débouchant à son autre extrémité (33) dans une zone évasée (34), ledit embout (29) étant de dimensions telles qu'au voisinage de la zone évasée (34) il puisse pénétrer, avec jeu (39), dans la zone d'action (19) des moyens d'aspiration (18) et que l'ouverture du passage traversant (30) dans la zone évasée (34) s'adapte étroitement à l'extrémité (24) du tube (22) de passage direct des vapeurs, ou à un adaptateur (26) prolongeant ledit tube (22), dans la deuxième phase d'utilisation du dispositif (1).

17. Dispositif selon l'une quelconque des revendications 15 ou 16 caractérisé en ce que l'embout (29) comporte un conduit de passage direct (37) de l'extérieur de l'embout (29) vers la zone d'action (19) des moyens d'aspiration (18).

18. Réacteur (40) pour réaction chimique caractérisé en ce qu'il est constitué d'un récipient (2) destiné à contenir le mélange réactionnel et d'un dispositif (1) selon l'une quelconque des revendications 1 à 17 adapté à l'ouverture (6) dudit récipient (2).

19. Utilisation du réacteur (40) selon la revendication 18 comme réacteur (40) pour réactions chimiques par voie humide, ledit réacteur étant soumis à un chauffage par micro-ondes.

## Claims

1. Device (1) which can be fitted to a receptacle (2), especially for chemical reactions which generate fumes, suction means (18) being combined with the said device (1), characterised in that it comprises:
- means (3) for condensing the fumes, in a first stage of use,
- passing means, which are independent of the condensing means (3) and which pass through the latter, for passing the fumes from inside (11) to outside the receptacle (2), in a second stage of use,
- means (5) for fitting the device (1) to the opening (6) of the receptacle (2).

2. Device according to Claim 1, characterised in that the condensing means (3) consist of a condensation chamber (9) connected via first passing means (10) to the inside (11) of the receptacle (2), the said first passing means (10) making it possible, on the one hand, for the fumes to pass from the receptacle (2) towards the condensation chamber (9) and, on the other hand, for the main condensate to return into the receptacle (2).

3. Device according to either of Claims 1 and 2, characterised in that the condensation chamber (9) comprises second passing means (17) which, on the one hand, connect the suction means (18) to the internal space of the condensation chamber (9) in the first stage of use and, on the other hand, allow a purging gas to enter the receptacle (2) in the second stage of use of the said device (1).

4. Device according to Claim 3, characterised in that the useful cross-section of the second passing means (17) is less than the useful cross-section of the first passing means (10).

5. Device according to any one of Claims 2 to 4, characterised in that the condensation chamber (9) is substantially cylindrical and is delimited by a side wall (13) and at least one top wall (14) comprising the second passing means (17).

6. Device according to any one of Claims 2 to 5, characterised in that the side wall (13) extends above the top wall (14) in order to delimit a region of operation (19) of the suction means (18).

7. Device according to either of Claims 5 and 6, characterised in that the external surface (20) of the top wall (14) of the condensation chamber (9) is shaped in order to constitute a region for collecting a secondary condensate and in that the device (1) comprises means for returning the said condensate into the condensation chamber (9).

8. Device according to any one of Claims 2 to 7, characterised in that the condensation chamber (9) comprises a double jacket (63) which delimits a chamber (64) for circulating a coolant fluid.

9. Device according to any one of Claims 1 to 8, characterised in that the means (4) for passing the fumes directly from inside (11) to outside the receptacle (2) in the second stage of use of the said device (1) consist of a tube (22), one (23) of the ends (23, 24) of which is immersed in the receptacle (2) and the other end (24) of which is intended to be connected to the suction means (18).

10. Device according to any one of Claims 2 to 9, characterised in that the tube (22) which constitutes the means (4) for passing the fumes directly from inside (11) to outside the receptacle (2) passes through the condensation chamber (9).

11. Device according to Claim 10, characterised in that the tube (22) is surrounded, over at least a part of its length situated in the condensation chamber (9), by an annular chamber (72) delimited by a wall (68), which isolates the tube (22) from the condensation chamber (9).

12. Device according to either of Claims 10 and 11, characterised in that the tube (22) is detachable and passes through the top wall (14) of the condensation chamber (9) via an orifice (51), means (55) for fixing the tube (22) in the orifice (51) being provided.

13. Device according to any one of Claims 2 to 12, characterised in that between the condensation chamber (9) and the means (5) for fitting the device (1) to the opening (6) of the receptacle (2), the said device (1) comprises a neck (12).

14. Device according to Claim 13, characterised in that the neck (12) is detachable and contains means (58, 57) for fixing on the one hand, to the condensation chamber (9) and, on the other hand, to the means for fitting (5) to the opening (6) of the receptacle (2).

15. Device according to any one of Claims 2 to 14, characterised in that it additionally comprises means (28) for combining the device (1) with the suction means (18).

16. Device according to Claim 15, characterised in that the means (28) for combining the device (1) with the suction means (18) consist of a joining piece (29), comprising a through passage (30) provided at one of its ends (31) with means (32) for connecting to the suction means (18), the said through passage (30) emerging at its other end (33) in a widened region (34), the said joining piece (29) being of such dimensions that, in the vicinity of the widened region (34), it can enter, with clearance (39), the region of operation (19) of the suction means (18) and such that the opening of the through passage (30) in the widened region (34) is tightly fitted to the end (24) of the tube (22) for directly passing the fumes, or to an adaptor (26) which extends the said tube (22), in the second stage of use of the device (1).

17. Device according to either of Claims 15 and 16, characterised in that the joining piece (29) comprises a pipe (37) for passing directly from outside the joining piece (29) towards the region of operation (19) of the suction means (18).

18. Reactor (40) for a chemical reaction, characterised in that it consists of a receptacle (2) intended to contain the reaction mixture and of a device (1) according to any one of Claims 1 to 17 fitted to the opening (6) of the said receptacle (2).

19. Use of the reactor (40) according to Claim 18 as a reactor (40) for chemical reactions by the wet route, the said reactor being subjected to microwave heating.

## Patentansprüche

1. An einen Behälter (2) anpaßbare Vorrichtung (1), insbesondere für chemische Reaktionen, die Dämpfe erzeugen, wobei Ansaugeinrichtungen (18) mit der Vorrichtung (1) verbunden sind, dadurch gekennzeichnet, daß sie aufweist:
- Kondensationseinrichtungen (3) für Dämpfe, in einer ersten Benutzungsphase,
- Durchlaßeinrichtungen, unabhängig von den Kondensationseinrichtungen (3), welche diese letzteren durchqueren, für den Durchlaß von Dämpfen aus dem Inneren (11) des Behälters (2) nach außen in einer zweiten Benutzungsphase,
- Einrichtungen (5) zum Anpassen der Vorrichtung (1) an die Öffnung (6) des Behälters (2).

2. Vorrichtung nach Anspruch 1, dadurch gekennzeichnet, daß die Kondensationseinrichtungen (3) durch eine Kondensationskammer (9) gebildet sind, die durch erste Durchlaßeinrichtungen (10) mit dem Inneren (11) des Behälters (2) verbunden ist, wobei die ersten Durchlaßeinrichtungen (2) einerseits den Durchgang von Dämpfen vom Behälter (2) zur Kondensationskammer (9) und andererseits die Rückführung des Hauptkondensats in den Behälter (2) ermöglichen.

3. Vorrichtung nach einem der Ansprüche 1 oder 2, dadurch gekennzeichnet, daß die Kondensationskammer (9) zweite Durchlaßeinrichtungen (17) aufweist, die einerseits die Verbindung der Ansaugeinrichtungen (18) und des Innenraumes der Kondensationskammer (9) in der ersten Benutzungsphase und andererseits den Eintritt eines Spülgases in den Behälter (2) in der zweiten Benutzungsphase der Vorrichtung (1) sicherstellen.

4. Vorrichtung nach Anspruch 3, dadurch gekennzeichnet, daß der Nutzquerschnitt der zweiten Durchlaßeinrichtungen (17) geringer ist als der Nutzquerschnitt der ersten Durchlaßeinrichtungen (10).

5. Vorrichtung nach einem der Ansprüche 2 bis 4, dadurch gekennzeichnet, daß die Kondensationskammer (9) im wesentlichen zylindrisch ist, begrenzt durch eine Seitenwand (13) und wenigstens eine Deckwand (14), die die zweiten Durchlaßeinrichtungen (17) aufweist.

6. Vorrichtung nach einem der Ansprüche 2 bis 5, dadurch gekennzeichnet, daß die Seitenwand (13) sich über die Deckwand (14) erhebt, um einen Wirkbereich (19) für die Absaugeinrichtungen (18) zu begrenzen.

7. Vorrichtung nach einem der Ansprüche 5 oder 6, dadurch gekennzeichnet, daß die Außenfläche (20) der Deckwand (14) der Kondensationskammer (9) so angepaßt ist, daß sie einen Sammelbereich eines Sekundärkondensates bildet, und daß die Vorrichtung (1) Rückführeinrichtungen für das Kondensat in die Kondensationskammer (9) aufweist.

8. Vorrichtung nach einem der Ansprüche 2 bis 7, dadurch gekennzeichnet, daß die Kondensationskammer (9) eine doppelte Ummantelung (63) aufweist, die eine Zirkulationskammer (64) für ein Kühlfluid begrenzt.

9. Vorrichtung nach einem der Ansprüche 1 bis 8, dadurch gekennzeichnet, daß die Einrichtungen (4) für den direkten Durchlaß von Dämpfen aus dem Inneren (11) des Behälters (2) nach außen in der zweiten Benutzungsphase der Vorrichtung (1) durch ein Rohr (22) gebildet sind, dessen eines Ende (23, 24) in den Behälter (2) taucht und dessen anderes Ende (24) dazu bestimmt ist, mit den Absaugeinrichtungen verbunden zu werden.

10. Vorrichtung nach einem der Ansprüche 2 bis 9, dadurch gekennzeichnet, daß das Rohr (22), das die Einrichtungen (4) für den direkten Durchlaß der Dämpfe aus dem Inneren (11) des Behälters (2) nach außen bilden, die Kondensationskammer (9) durchquert.

11. Vorrichtung nach Anspruch 10, dadurch gekennzeichnet, daß das Rohr (22) über wenigstens einen Teil seiner Länge, der in der Kondensationskammer (9) liegt, von einer ringförmigen Kammer (72) umgeben ist, die durch eine Wand (68) begrenzt ist, welche das Rohr (22) von der Kondensationskammer (9) isoliert.

12. Vorrichtung nach einem der Ansprüche 10 oder 11, dadurch gekennzeichnet, daß das Rohr (22) losbar ist, die Deckwand (14) der Kondensationskammer (9) durch eine Öffnung (51) durchquert, wobei Befestigungseinrichtungen (55) für das Rohr (22) in der Öffnung (51) vorgesehen sind.

13. Vorrichtung nach einem der Ansprüche 2 bis 12, dadurch gekennzeichnet, daß zwischen der Kondensationskammer (9) und den Einrichtungen (5) zum Anpassen der Vorrichtung (1) an die Öffnung (6) des Behälters (2) die Vorrichtung (1) einen Hals (12) aufweist.

14. Vorrichtung nach Anspruch 13, dadurch gekennzeichnet, daß der Hals (12) losbar ist und Befestigungseinrichtungen (58, 57) einerseits zur Kondensationskammer (9) und andererseits zu den Einrichtungen (5) zum Anpassen an die Öffnung (6) des Behälters (2) aufweist.

15. Vorrichtung nach einem der Ansprüche 2 bis 14, dadurch gekennzeichnet, daß sie weiterhin Einrichtungen (28) aufweist, um die Vorrichtung (1) mit den Absaugeinrichtungen (18) zu verbinden.

16. Vorrichtung nach Anspruch 15, dadurch gekennzeichnet, daß die Einrichtungen (28) zum Verbinden der Vorrichtung (1) mit den Absaugeinrichtungen (18) durch einen Ansatz (29) gebildet sind, welcher einen Durchgang (30) aufweist, der an einem seiner Enden (31) mit Verbindungseinrichtungen (32) zu den Absaugeinrichtungen (18) versehen ist, wobei der Durchgang (30) an seinem anderen Ende (33) in einem konisch erweiterten Bereich (34) mündet, wobei der Ansatz (29) Abmessungen derart hat, daß nahe dem konisch erweiterten Bereich (34) er mit Spiel (39) in den Wirkbereich (19) der Absaugeinrichtungen (18) eindringen kann und daß die Öffnung des Durchgangs (30) in den konisch erweiterten Bereich (34) sich eng an das Ende (24) des Rohrs (22) für den direkten Durchlaß der Dämpfe anpaßt, oder an einen Adapter (26), der das Rohr (22) verlängert, in der zweiten Benutzungsphase der Vorrichtung (1).

17. Vorrichtung nach einem der Ansprüche 15 oder 16, dadurch gekennzeichnet, daß der Ansatz (29) eine Leitung (37) für den direkten Durchlaß von außerhalb des Ansatzes (29) in den Wirkbereich (19) der Absaugeinrichtungen (18) aufweist.

18. Reaktor (40) für eine chemische Reaktion, dadurch gekennzeichnet, daß er durch einen Behälter (2), dazu bestimmt, das Reaktionsgemisch zu enthalten, und eine Vorrichtung (1) nach einem der Ansprüche 1 bis 17, angepaßt an die Öffnung (6) des Behälters (2), gebildet ist.

19. Verwendung des Reaktors (40) nach Anspruch 18 als Reaktor (40) für chemische Reaktionen auf feuchtem Wege, wobei der Reaktor einer Erhitzung durch Mikrowellen unterworfen wird.
